# EUROPÄISCHE PATENTSCHRIFT

(11) **EP 3 545 217 B1**
(45) Veröffentlichungstag und Bekanntmachung des Hinweises auf die Patenterteilung: **08.07.2020**
(21) Anmeldenummer: 17808759.9
(22) Anmeldetag: 20.11.2017
(51) Int. Cl.: F16H 63/34, B60T 1/00, F16D 63/00

(54) **PARKSPERRE FÜR EIN KRAFTFAHRZEUG**
PARKING LOCK FOR A MOTOR VEHICLE
FREIN DE STATIONNEMENT POUR VÉHICULE À MOTEUR

(30) Priorität: 25.11.2016 DE 102016223460
(43) Veröffentlichungstag der Anmeldung: 02.10.2019
(73) Patentinhaber: Schaeffler Technologies AG & Co. KG, 91074 Herzogenaurach (DE)
(72) Erfinder: KRÄMER, Klaus, 91438 Lenkersheim (DE); FEUERBACH, Matthias, 97070 Würzburg (DE); ROST, Markus, 91074 Herzogenaurach (DE); HEUMANN, Tobias, 91722 Arberg (DE)
(86) Internationale Anmeldenummer: PCT/DE2017/100988
(87) Internationale Veröffentlichungsnummer: WO 2018/095476

(56) Entgegenhaltungen:
- EP-A2- 0 145 848
- DE-A1- 10 308 040
- DE-A1-102009 030 005
- DE-A1-102009 030 027
- DE-A1-102010 053 857
- DE-C- 802 605
- US-A1- 2008 127 772

## Beschreibung

### Gebiet der Erfindung

Die Erfindung betrifft eine Parksperre für ein Kraftfahrzeug, wobei die Parksperre aufweist: ein Gehäuse, eine Sperrklinke, die um eine Drehachse schwenkbar angeordnet ist und einen Klinkenzahn aufweist, der zum formschlüssigen Eingriff in ein Parksperrenrad ausgebildet ist, einen Aktuator zur Betätigung der Sperrklinke, so dass diese reversibel mit ihrem Klinkenzahn in Eingriff mit dem Parksperrenrad gebracht werden kann und bewegliches Übertragungsmittel, das die Bewegung des Aktuators auf die Sperrklinke überträgt.

### Hintergrund der Erfindung

Eine gattungsgemäße Parksperre ist aus der DE 10 2010 053 857 A1 bekannt. Ähnliche Lösungen zeigen DE 10 2011 080 498 A1 oder JP H07-144 616 A. Bei der letztgenannten Lösung kommt als mechanisches Getriebeelement zur Übertragung der Bewegung des Aktuators auf die Sperrklinke ein Planetenwälzgetriebe zum Einsatz. Damit ist es möglich, relativ hohe Übertragungskräfte zu realisieren.

Beim Parken eines Fahrzeugs beispielsweise an einem Hang erzeugt das Fahrzeuggewicht, abhängig vom Raddurchmesser, von der Getriebeübersetzung und vom Radius des Sperrrads (Sperrverzahnung) eine Kraft auf die geschlossene Klinke und somit wiederrum auf den Parksperrenmechanismus. Beim Entriegeln der Parksperre am Hang muss somit diese anliegende Kraft überwunden werden.

Eine gattungsgemäße Parksperre benötigt also zum Auslegen der Sperrklinke, d. h. zum Verbringen derselbe in die entriegelte Position, eventuell eine relativ große Kraft. Diese kann sich aus der Geometrie zwischen dem Klinkenzahn und der Ausnehmung in der Sperrverzahnung ergeben, namentlich durch einen entsprechenden Hinterlegungswinkel. Eine hohe Kraft kann sich auch aufgrund der Reibungsverhältnisse und des realisierten Reibkeils ergeben.

Die Kräfte müssen sicher abgestützt werden, andererseits sollen die Parksperre und das Getriebe möglichst leicht bauen. Insbesondere bei hohen Kräften und beengtem Bauraum können die beweglichen Teile der Parksperre am Gehäuse der Parksperre anschlagen, das den Körperschall überträgt. Versucht der Bediener, die Parksperre jenseits der Abweisgeschwindigkeit einzulegen, entsteht ein Ratschen, und unerwünschte Schwingungen breiten sich aus.

Gemäß DE 102 45 951 A1 ist vorgesehen, den Körperschall zu reduzieren, indem eine Feder in den Kraftfluss eingebracht wird. Durch die Feder trifft das Übertragungsglied auf den Anschlag unter zeitlicher Verzögerung ein. Durch das zeitliche Verzögern steht für den Kraftstoß beim Auftreffen auf den Endanschlag mehr Zeit zur Verfügung, so dass der Körperschall bereits am Entstehen gehindert wird. Eine Dämpfung wird durch diese Anordnung nicht bewirkt. Beim Abweisen, wenn die Parksperre bei zu hoher Geschwindigkeit betätigt wird, pulsiert das Übertragungsglied periodisch gegen den Endanschlag. Ohne eine Dämpfung wird diesem System nur unzureichend Energie entzogen.

Zur Entkoppelung vom Körperschall ist in US 2014 / 0 231 213 A1 vorgeschlagen, eine Kunststoffbuchse oder eine Kunststoffschicht als Dämpfungsmittel zwischen dem Gehäuse und dem Übertragungsmittel anzuordnen. Bei dieser Parksperre wird nicht die Entstehung des Körperschalls verhindert, sondern durch den Einzug einer Kunststoffschicht versucht, dessen weitere Ausbreitung zu verhindern. Dies erfordert einerseits einen hitze- und ölfesten Kunststoff sowie einen Mehraufwand in der gezeigten Montage durch Verschrauben.

Gemäß DE 10 2009 030 005 A1 ist vorgesehen, in der Verzahnung des Parksperrenrads Dämpfungselemente anzuordnen. Diese sollen ein sanfteres Einrasten der Parksperre ermöglichen. Weitere Parksperren sind in DE 10 2009 030 027 A1, US 2008/0 127 772 A1, DE 10 2010 053 857 A1, DE103 08 040 A1, DE 802 605 C und EP 0 145 848 A gezeigt.

### Aufgabe der Erfindung

Der vorliegenden Erfindung liegt die Aufgabe zugrunde, eine gattungsgemäße Parksperre zu realisieren, die kompakt baut und die vorstehend genannten Nachteile überwindet.

### Zusammenfassung der Erfindung

Die Aufgabe wird durch eine Parksperre gemäß Anspruch 1 gelöst.

Die erfindungsgemäße Parksperre weist ein Federpaket für für das bewegliche Übertragungsmittel als Anschlag auf. Das Federpaket kann sicherstellen, dass bei einem Betätigungsvorgang ein Anschlagen der beweglichen Teile am Gehäuse der Parksperre vermindert wird. Der durch eine Abweisbewegung der Sperrklinke erzeugte Kraftstoß wird durch das Federpaket zum einen verzögert. Dadurch steht mehr Zeit für den Impuls zur Wechselwirkung zur Verfügung, so dass die Schallentstehung im Vorfeld verhindert wird. Zum anderen ermöglicht es das Federpaket, dass sich die Federn untereinander verformen und dadurch auch aneinander reiben. Durch diese Reibung übernehmen die Federn zusätzlich eine dämpfende Funktion.

In einer Ausführungsform ist der Endanschlag der Parksperre durch ein verformbares Federblechpaket gebildet, das den Impuls durch innere Reibung abbauen kann. Das Übertragungsmittel ist beispielsweise die Sperrklinke selbst oder ein die Sperrklinke betätigendes Bauteil wie ein Schlitten, der Rollen führt.

In der einfachsten Ausführungsform ist das Federpaket als ein gedoppeltes Federblech ausgeführt. Die Federn stützen sich aneinander ab. Sie können geometrisch gleich ausgebildet sein. In einer anderen Ausführungsform unterscheiden sich eine, einige oder alle Federbleche voneinander.

Da das Federpaket in erster Linie federt und nur zu einem kleinen Teil dämpft, kann dämpfende Wirkung des Federpakets erhöht werden, indem die Federbleche mit Reibmaterial beschichtet werden, um die innere Reibung beim Verformen zu erhöhen. Zum gleichen Zweck können die einzelnen Federbleche untereinander minimal beabstandet sein.

Bei knappem Bauraum und ausführungsbedingt starker Anregung der Schwingungen eines Schlittens einer Parksperre beim Ratschen oder beim Abweisen der Klinke bei höheren Fahrzeuggeschwindigkeiten reicht im Stand der Technik der freie Schwingbereich der Schlitteneinheit unter Umständen nicht aus, was dazu führt, dass der Schlitten bei der Ratsch- / Abweisfunktion mit "hoher" Anregungs-Frequenz in die jeweilige geometrische Endbegrenzung pulsiert. Bei einer Ausführung des Gehäuses als Aluminiumwerkstoff ist das Aluminium nur begrenzt als Anschlag nutzbar, da es durch seine Festigkeit und Härte diese Funktion nur begrenzt übernehmen kann. Bei Ausführung des Gehäuses als Stahlwerkstoff ist der Stahl nur begrenzt als Anschlag nutzbar, da keine Körperschallentkopplung oder Verformung und damit kein Abbau der Energie stattfindet. Daher ist es in einer Ausgestaltung der Erfindung vorgesehen, zwei oder mehrere geschichtete Federbleche aus Federstahl als Endanschlag zu nutzen, welche die Körperschallübertragung vom Stahlschlitten zum Aluminiumgehäuse entkoppeln, trotzdem die großen Anschlagskräfte aufnehmen können und darüber hinaus die Impulse durch Verformungsarbeit und im Fall der geschichteten Ausführung durch Reibung zwischen den Blechen (bei Verformung) absorbieren und die Impulse somit dämpfen.

Die Parksperre kann in verschiedenen Arten von Getrieben verbaut werden. Beispielsweise eignet sie sich für Kraftfahrzeuge mit manuellen Getrieben, mit automatisierten oder automatischen Getrieben oder für Getriebe von Elektrofahrzeugen.

Die Parksperre kann ein eigenes Gehäuse als Parksperrengehäuse aufweisen. Das Parksperrengehäuse bildet dann mit dem Getriebegehäuse entweder ein gemeinsames Gesamtgehäuse, oder das Parksperrengehäuse ist innerhalb des Getriebegehäuses angeordnet. Alternativ kann die Parksperre ohne eigenes Gehäuse sein, so dass das Gehäuse für die Parksperre das Getriebegehäuse selbst ist.

Die Ausleitung der Stützkraft der Sperrklinke, die durch das Verriegelungsmoment und dem Eingriffswinkel des Klinkenzahns der Sperrklinke mit der Verzahnung des Parksperrenrads erzeugt wird, kann in einer Ausführungsform über ein Rollenpaket in das Gehäuse erfolgen.

Zwei gehäuseseitige Rollen können zur Reibungsminimierung nadelgelagert sein. Sie bilden Stützrollen aus. Die dritte Rolle, die auf der Sperrklinke abrollt, ist eine Vollrolle, die ihre Radiallagerung durch die beiden darüber befindlichen Stützrollen erfährt.

Die Rollen sind optional in einem Schlitten integriert, der als Führungsgehäuse fungiert. Der Schlitten weist in einer Ausführungsform zwei längliche Seitenteile auf, die vorzugsweise als Blechstanzteile hergestellt sind. Beide Seitenteile sind durch zwei Querteile stirnseitig verbunden. Auch die Querteile sind vorzugsweise als Blechstanzteile hergestellt. Die Seitenteile und die Querteile können miteinander vernietet sein.

Der Schlitten weist in vorteilhafter Ausführungsform ein Antriebszahnsegment sowie Führungsrollen auf. Die Führungsrollen sind so platziert, dass diese im optimalen Kraftfluss zum Antriebsritzel stehen.

Der Schlitten weist ferner eine Druckfeder auf, die auf dem Antriebszahnsegment geführt ist. Er nimmt auch die Achsen der Stützrollen auf und führt diese axial.

Der Schlitten kann optional selbst mit Endanschlägen versehen werden. Die Endanschläge können zum Einlernen des Systems genutzt werden, beispielsweise für den Fall, dass eine elektromotorische Ansteuerung erfolgt.

Die Parksperre kann alternativ oder zusätzlich weitere Dämpfungsmittel aufweisen. Beispielsweise können Beschichtungen durch Elastomere vorgesehen sein, oder die Verschiebung des Schlittens erfolgt unmittelbar vor dem Anschlag gegen einen höheren Widerstand - beispielsweise durch Reibflächen, die aneinander gleiten.

Die Parksperre kann beispielsweise eine Armierung für eine Rolle aufweisen, die aus einem gehärteten Stahlblech gebildet ist. Die Armierung kann die auftretenden Hertzschen Pressungen durch die Rolle sicher aufnehmen. Zwischen der Armierung und dem Gehäuse kann beispielsweise ein keilförmiges Elastomer angeordnet sein, der zusätzlich dämpft.

Als weitere Dämpfungsmittel könnten ein Blechpaket, ein gekapseltes oder ungekapseltes Gummielement oder ein Fluidum vorgesehen sein.

Die erfindungsgemäße Parksperre bildet eine robuste, einfache, kompakte und reibungsoptimierte Lagerung. Sie baut besonders kompakt, wenn der Abstand des Schlittens von dem Federpaket im verriegelten Zustand der Parksperre weniger als die zweifache, vorzugsweise die einfache Breite des Klinkenzahns beträgt.

### Kurze Beschreibung der Figuren

In den Figuren ist ein Ausführungsbeispiel der Erfindung dargestellt. Es zeigen:
- Figur 1: die wesentlichen Bauteile einer ersten erfindungsgemäßen Parksperre ohne einen Schlitten und ohne eine Sperrklinke im Längsschnitt,
- Figur 2: die Parksperre gemäß Figur 1 mit einem Schlitten und ohne eine Sperrklinke in einer perspektivischen Teilansicht,
- Figur 3: die Parksperre gemäß Figur 2 mit der zusätzlichen Sperrklinke in einer perspektivischen Ansicht,
- Figur 4: einen Teil einer zweiten Parksperre.

### Ausführliche Beschreibung der Figuren

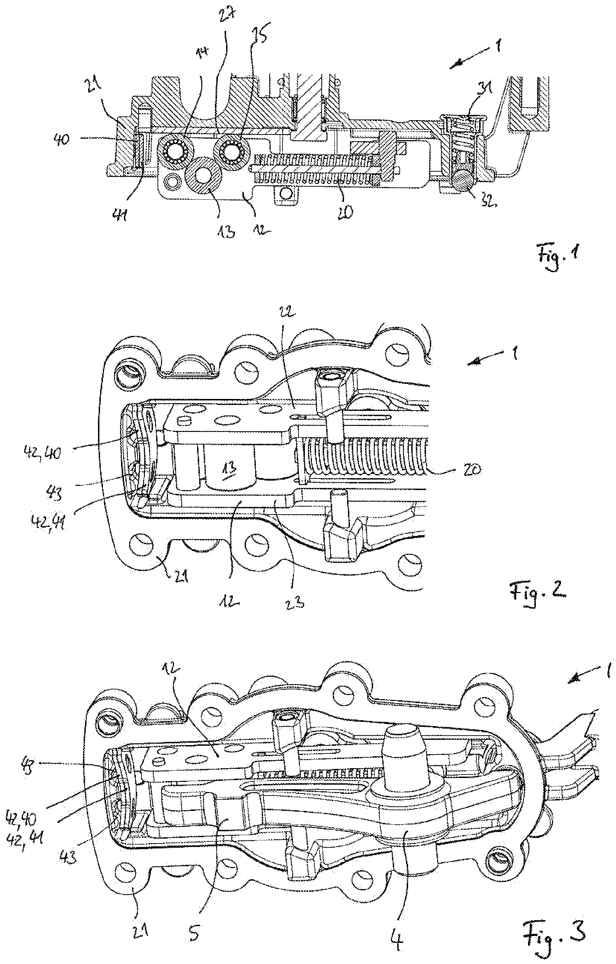

In den Figuren 1 bis 4 sind zwei Parksperren 1 dargestellt, wobei nur die wesentlichen Funktionsteile dargestellt sind. Abdeckungen und Anbindungsbauteile der Anordnung sind aus Gründen der Übersichtlichkeit weggelassen. Nachfolgend werden die erfindungsrelevanten Merkmale beschrieben, die auf einem grundsätzlichen Baukonzept einer Parksperre basieren, wie sie in der oben genannten DE 10 2010 053 857 A1 und DE 10 2011 080 498 A1 der Anmelderin im Detail erläutert sind. Auf diese vorbekannten Lösungen wird insofern ausdrücklich Bezug genommen, um betreffend das grundsätzliche Funktionsprinzip einer Parksperre Wiederholungen zu vermeiden.

Generell umfasst die Parksperre 1 eine Sperrverzahnung 2, die eine Anzahl Ausnehmungen 3 an ihrem Umfang aufweist. Weiteres zentrales Bauteil der Parksperre 1 ist eine Sperrklinke 4, die um eine Drehachse a schwenkbar angeordnet ist.

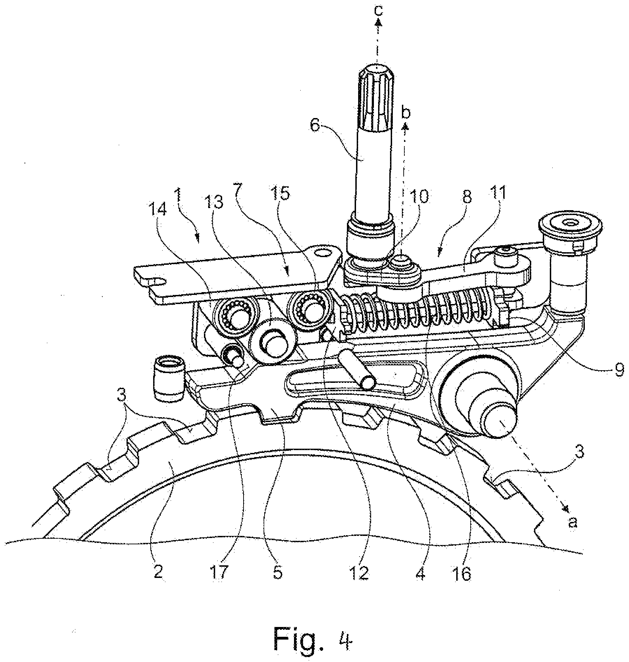

In Figur 4 ist die Sperrklinke 4 in einer nach unten (in Richtung auf die Sperrverzahnung 2 zu) gerichteten Stellung zu sehen, in der ein Klinkenzahn 5 der Sperrklinke 4 in eine der Ausnehmungen 3 der Sperrverzahnung 2 eingreift und so die Anordnung verriegelt.

Die Verriegelung bzw. Entriegelung der Parksperre 1 erfolgt über einen Aktuator 6, der hier als Welle angedeutet ist, die für das Ver- bzw. Entriegeln um eine Drehachse c dreht.

Die Übertragung der Bewegung des Aktuators 6 auf die Sperrklinke 4 erfolgt mittels eines Getriebeelements 7. Wie bei den genannten vorbekannten Lösungen, umfasst das Getriebeelement 7 einen linearverschieblichen Schlitten 12, in dem drei Rollen 13, 14 und 15 gelagert sind.

Die Rolle 13 kann dabei Kontakt mit einer Rampe 17 nehmen (s. Fig. 1), die an der Sperrklinke 4 ausgebildet ist. Bei linearer Bewegung des Schlittens 12 wird folglich die Sperrklinke 4 verschwenkt.

Im Falle der Figur 4 umfasst das Getriebeelement 7 einen Kurbeltrieb 8, mit dem ein Teil 9 des Getriebeelements 7 linear bewegt werden kann. Zwischen dem Teil 9 und dem Schlitten 12 ist eine Stange 16 angeordnet, so dass sich eine lineare Bewegung des Teils 9 auf den Schlitten 12 überträgt. Die Stange 16 ist von einer Druckfeder 20 umschlossen, die die Sperrklinke 4 vorspannt und in der verriegelten Position hält. Der Kurbeltrieb 8 hat dabei eine Kurbel 10 und einen Pleuel 11, die gelenkig miteinander verbunden sind. Die Kurbel 10 ist mit dem Aktuator 6 drehfest verbunden. Der Pleuel 11 ist mit dem Teil 9 gelenkig verbunden.

Wird nun der Aktuator 6 betrieben, d. h. erfolgt eine Drehung um die Achse c, bewegt sich die Kurbel 10 entsprechend mit und zieht das Pleuel 11 mit. Mit dem Kurbeltrieb 8 kann - aufgrund der Eigenschaft eines Kurbeltriebs - nun bei gleichem, kleinen anliegenden Drehmoment am Aktuator 6 anfangs eine große Kraft zum Entriegeln realisiert werden, ohne den Gesamtstellweg zu reduzieren. Gegen zunehmenden Stellwinkel bzw. -weg nimmt die Kraft dann ab, was in diesem Fall aber nicht stört, da eine große Kraft nur anfangs benötigt wird, bis (in diesem Fall) die Rolle 13 den Hochpunkt der Rampe 17 der Sperrklinke 4 erreicht hat und die Verriegelung der Sperrklinke durch die Rolle 13 somit aufgehoben wird.

Wie Figur 4 zu entnehmen ist, weist die Schwenkachse b der scharnierartigen Verbindung zwischen der Kurbel 10 und dem Pleuel 11 in vertikaler Richtung, während die Drehachse a der Sperrklinke 4 in horizontale Richtung weist. Projiziert man demgemäß die Schwenkachse b auf die Drehachse a, sind diese beiden Achsen zueinander rechtwinklig ausgerichtet.

Wie insbesondere aus Figur 1 zu entnehmen ist, wälzt die Rolle 13 auf der Sperrklinke 4 ab, während die Rollen 14, 15 auf einer Armierung 27 abrollen. Die Armierung 27 ist als ein ebenes, gehärtetes Stahlblech ausgebildet und kontaktiert rückseitig das Gehäuse 21 der Parksperre 1.

In der dargestellten Ausführungsform sind die beiden gehäuseseitigen Rollen 14, 15 zur Reibungsminimierung nadelgelagert und bilden Stützrollen aus. Die dritte Rolle 13, die auf der Sperrklinke abrollt, ist eine Vollrolle.

Die Rollen sind in einem Schlitten 12 integriert. Der Schlitten 12 weist zwei längliche Seitenteile 22, 23 auf, die vorzugsweise als Blechstanzteile hergestellt sind. Beide Seitenteile 22, 23 sind durch zwei Querteile 24, 25 stirnseitig verbunden. Auch die Querteile 24, 25 sind vorzugsweise als Blechstanzteile hergestellt. Die Seitenteile 22, 23 und die Querteile 24, 25 können miteinander vernietet sein.

Der Schlitten 12 trägt ein Antriebszahnsegment 26 sowie Führungsrollen 28. Die Führungsrollen 28 sind so platziert, dass diese im optimalen Kraftfluss zum Antriebsritzel des Aktuators 6 stehen.

Der kastenartige Schlitten 12 weist ferner die Druckfeder 20 auf, die auf dem Antriebszahnsegment 26 geführt ist. Er nimmt auch die Achsen der Stützrollen 14, 15 auf und führt diese axial.

Zwischen dem Gehäuse 21 der Parksperre 1 und dem Schlitten 12 bilden zwei Federbleche 40, 41 als Federpaket 42 einen Endanschlag für den Schlitten 12 am Gehäuse 21. Die beiden Federbleche 40, 41 sind im Gehäuse 21 eingespannt. Sie weisen eine konvexe Form auf und können sich beim Auftreffen des Schlittens 12 verformen, so dass sie dessen Bewegungsenergie durch Verformung und damit innere Reibung in Wärme umsetzen können und damit ein Dämpfungsmittel bilden. Die beiden Federbleche 40, 41 sind vorliegend ihrerseits ein drittes Federblech 43 angefedert.

### Bezugszeichenliste

- 1: Parksperre
- 2: Sperrverzahnung
- 3: Ausnehmung
- 4: Sperrklinke
- 5: Klinkenzahn
- 6: Aktuator
- 7: Getriebeelement
- 8: Kurbeltrieb
- 9: Teils des Getriebeelements
- 10: Kurbel
- 11: Pleuel
- 12: Schlitten
- 13: Rolle
- 14: Rolle
- 15: Rolle
- 16: Stange
- 17: Rampe

- 20: Druckfeder
- 21: Gehäuse
- 22: Seitenteil
- 23: Seitenteil
- 24: Querteil
- 25: Querteil
- 26: Antriebszahnsegment
- 27: Armierung
- 28: Führungsrolle
- 29: Klinkenausnehmung
- 30: Eingriffsmittel
- 31: Arretierung
- 32: Kugel

- 40: erstes Federblech
- 41: zweites Federblech
- 42: Federpaket
- 43: drittes Federblech

- a: Drehachse der Sperrklinke
- b: Schwenkachse der Verbindung zwischen Kurbel und Pleuel
- c: Drehachse des Aktuators

## Patentansprüche

1. Parksperre (1) für ein Kraftfahrzeug, wobei die Parksperre (1) aufweist:
- ein Gehäuse (21),
- eine Sperrklinke (4), die um eine Drehachse (a) schwenkbar angeordnet ist und einen Klinkenzahn (5) aufweist, der zum formschlüssigen Eingriff in ein Parksperrenrad ausgebildet ist,
- einen Aktuator (6) zur Betätigung der Sperrklinke (4), so dass diese reversibel mit ihrem Klinkenzahn (5) in Eingriff mit dem Parksperrenrad gebracht werden kann,
- ein bewegliches Übertragungsmittel, das die Bewegung des Aktuators (6) auf die Sperrklinke (4) überträgt,
**dadurch gekennzeichnet, dass**
- die Parksperre (1) ein Federpaket (42) als Anschlag für das bewegliche Übertragungsmittel aufweist.

2. Parksperre (1) nach Anspruch 1, **dadurch gekennzeichnet, dass** das bewegliche Übertragungsmittel eine Rolle (13, 14, 15) enthält, die die Bewegung des Aktuators (6) auf die Sperrklinke (4) überträgt.

3. Parksperre (1) nach Anspruch 1 oder 2, **dadurch gekennzeichnet, dass** das bewegliche Übertragungsmittel einen Schlitten (12) aufweist, der linear verschieblich ist.

4. Parksperre (1) nach Anspruch 3, **dadurch gekennzeichnet, dass** der Abstand des Schlittens (12) von dem Federpaket (42) im verriegelten Zustand der Parksperre (1) weniger als die zweifache Breite des Klinkenzahns (5) beträgt.

5. Parksperre (1) nach einem der vorhergehenden Ansprüche, **dadurch gekennzeichnet, dass** das Federpaket (42) zwischen dem Übertragungsmittel dem Gehäuse (21) angeordnet ist.

6. Parksperre (1) nach einem der vorhergehenden Ansprüche, **dadurch gekennzeichnet, dass** das Federpaket (42) zwei oder mehrere, hintereinander angeordnete Federbleche (40, 41, 43) aufweist.

7. Parksperre (1) nach Anspruch 6, **dadurch gekennzeichnet, dass** mindestens zwei der Federbleche (40, 41) die gleiche Form aufweisen und unmittelbar hintereinander angeordnet sind.

8. Parksperre (1) nach Anspruch 6 oder 7, **dadurch gekennzeichnet, dass** mindestens eines der Federbleche (43) eine von einem anderen Federblech (40, 41) abweichende Form aufweist.

9. Parksperre (1) nach Anspruch 6, 7, oder 8, **dadurch gekennzeichnet, dass** die Federbleche (40, 41) mit Reibmaterial beschichtet sind.

10. Parksperre (1) nach einem der Ansprüche 6 bis 8, **dadurch gekennzeichnet, dass** die Federbleche (40, 41, 43) durch Federspalte voneinander beabstandet sind.

## Claims

1. A parking lock (1) for a motor vehicle, the parking lock (1) having:
- a housing (21),
- a locking pawl (4), which is pivotably arranged about an axis of rotation (a) and has a pawl tooth (5) which is designed for positive engagement in a parking lock gear,
- an actuator (6) for actuating the locking pawl (4) so that the locking pawl can be brought into reversible engagement with the parking lock gear with the pawl tooth (5) thereof,
- a movable transmission means which transmits the movement of the actuator (6) to the locking pawl (4),
**characterised in that**
- the parking lock (1) has a spring assembly (42) as a stop for the movable transmission means.

2. The parking lock (1) according to claim 1, **characterised in that** the movable transmission means contains a roller (13, 14, 15) which transmits the movement of the actuator (6) to the locking pawl (4).

3. The parking lock (1) according to claim 1 or claim 2, **characterised in that** the movable transmission means comprises a carriage (12) which is linearly displaceable.

4. The parking lock (1) according to claim 3, **characterised in that** the distance of the carriage (12) from the spring assembly (42) in the locked state of the parking lock (1) is less than twice the width of the pawl tooth (5).

5. The parking lock (1) according to any one of the preceding claims, **characterised in that** the spring assembly (42) is arranged between the transmission means the housing (21).

6. The parking lock (1) according to any one of the preceding claims, **characterised in that** the spring assembly (42) comprises two or more spring plates (40, 41, 43) arranged one behind the other.

7. The parking lock (1) according to claim 6, **characterised in that** at least two of the spring plates (40, 41) have the same shape and are arranged one directly behind the other.

8. The parking lock (1) according to claim 6 or claim 7, **characterised in that** at least one of the spring plates (43) has a shape that is different from one of the other spring plates (40, 41).

9. The parking lock (1) according to claim 6, 7 or 8, **characterised in that** the spring plates (40, 41) are coated with friction material.

10. The parking lock (1) according to any one of claims 6 to 8, **characterised in that** the spring plates (40, 41, 43) are spaced apart from one another by spring gaps.

## Revendications

1. Frein de stationnement (1) pour véhicule à moteur, le frein de stationnement (1) comportant :
- un boîtier (21),
- un cliquet d'arrêt (4) disposé de manière pivotante autour d'un axe de rotation (a) et présentant une dent de cliquet (5), laquelle est conçue pour s'engager par complémentarité de forme dans une roue du frein de stationnement,
- un actionneur (6) pour actionner le cliquet (4) de sorte que la dent de cliquet (5) puisse s'engager de manière réversible dans la roue du frein de stationnement,
- un moyen de transmission mobile qui transmet le mouvement de l'actionneur (6) au cliquet (4),
**caractérisé en ce que**
- le frein de stationnement (1) présente un ensemble ressort (42) comme butée pour le moyen de transmission mobile.

2. Frein de stationnement (1) selon la revendication 1, **caractérisé en ce que** le moyen de transmission mobile contient un galet (13, 14, 15) qui transmet le mouvement de l'actionneur (6) au cliquet (4).

3. Frein de stationnement (1) selon la revendication 1 ou 2, **caractérisé en ce que** le moyen de transmission mobile comprend un chariot (12) pouvant être déplacé de manière linéaire.

4. Frein de stationnement (1) selon la revendication 3, **caractérisé en ce que** la distance entre le chariot (12) et l'ensemble ressort (42) est inférieure à deux fois la largeur de la dent à cliquet (5) quand le frein de stationnement (1) est serré.

5. Frein de stationnement (1) selon l'une des revendications précédentes, **caractérisé en ce que** l'ensemble ressort (42) est disposé le moyen de transmission et le boîtier (21).

6. Frein de stationnement (1) selon l'une des revendications précédentes, **caractérisé en ce que** l'ensemble ressort (42) présente deux ou plusieurs plaques à ressort (40, 41, 43) disposées l'une derrière l'autre.

7. Frein de stationnement (1) selon la revendication 6, **caractérisé en ce qu'**au moins deux des plaques à ressort (40, 41) ont la même forme et sont disposées directement l'une derrière l'autre.

8. Frein de stationnement (1) selon la revendication 6 ou 7, **caractérisé en ce qu'**au moins une des plaques à ressort (43) a une forme différente d'une autre plaque à ressort (40, 41).

9. Frein de stationnement (1) selon la revendication 6, 7 ou 8, **caractérisé en ce que** les plaques à ressort (40, 41) sont revêtues d'un matériau de friction.

10. Frein de stationnement (1) selon l'une des revendications 6 à 8, **caractérisé en ce que** les plaques à ressort (40, 41, 43) sont espacées les unes des autres par des fentes de lame.
